# DEMANDE DE BREVET EUROPEEN

(11) **EP 2 076 083 A1**
(43) Date de publication de la demande: **01.07.2009**
(21) Numéro de dépôt: 08291246.0
(22) Date de dépôt: 29.12.2008
(51) Int. Cl.: H04W 60/00

(54) **Equipement mobile réveillé sur initiative d'un utilisateur ou par un évènement déclenchant**

(30) Priorité: 31.12.2007 FR 0709181
(71) Demandeur: Societé Française du Radiotéléphone, 75008 Paris (FR)
(72) Inventeur: Aveline, Sophie, 75015 Paris (FR); Mellé, Philippe, 78210 Saint Cyr l'École (FR)
(74) Mandataire: Debay, Yves

(57) **Abrégé**

La présente invention concerne un équipement mobile de type GSM, UMTS ou autre norme de téléphonie mobile (E-UTRAN). L'équipement mobile est apte à fonctionner selon un premier mode dit « écoute » dans lequel l'équipement mobile a un impact réduit de signalisation sur le réseau et un second mode dit « standard » dans lequel l'équipement mobile fonctionne comme un équipement mobile standard, le passage du mode « écoute » au mode de fonctionnement « standard » étant réalisé par un moyen de déclenchement automatique ou manuel prévu sur l'équipement mobile.

L'invention est plus particulièrement destinée à être embarquée dans tout équipement mobile destiné à ne pas être appelé mais à se connecter au réseau sur un événement déclencheur.

## Description

La présente invention se rapporte aux domaines des télécommunications à travers un réseau, et propose, en particulier, un équipement mobile réveillé sur initiative d'un utilisateur ou par un événement déclenchant.

De façon connue, les équipements mobiles désignent un élément de base du système cellulaire de téléphonie mobile GSM (Global System for Mobile) ou UMTS (Universal Mobile Telecommunication System). Ces équipements mobiles sont, par exemple, un téléphone portable, un assistant personnel, un dispositif de géolocalisation GNSS (Global Navigation Satellite System) (par exemple, « GPS » Global Positioning System) ou encore un ordinateur portable. Pour ces deux derniers exemples, un module radio GSM ou UMTS est alors ajouté.

De façon connue, les équipements mobiles comportent des moyens d'émission et de réception permettant d'établir un dialogue avec une station de base du réseau mobile appelée BTS (Base Transceiver Station) en GSM et Node B en UMTS, une interface pour l'utilisateur, des moyens de gestion des ressources, de l'itinérance et de commande de l'établissement des connexions et une carte d'accès adéquate pour l'utilisateur, par exemple, une carte « SIM » (Subscriber Identity Module).

Les équipements mobiles sous tension sont ainsi destinés à utiliser des services proposés par le réseau mobile, par exemple et de manière non limitative, appeler, recevoir des appels ou un fax, envoyer ou recevoir des messages en mode texte ou encore échanger des données (par exemple, accéder à Internet, WAP, etc.).

Certains équipements mobiles, comme par exemple, des téléphones portables, ont besoin d'être joignables à tout moment. Dès que ce type d'équipements mobiles passe d'une zone de localisation à une autre sur le réseau, l'équipement mobile déclenche une demande de mise à jour des localisations (localisation area update) au réseau pour rester joignable (mode circuit CS - Circuit Switched). Ces équipements mobiles utilisent donc une quantité importante de ressources sur le réseau. En effet, les bases de données appelés VLR (Visitor Location Registrer) et HLR (Home Location Registrer) en GSM se mettent à jour quand l'équipement mobile se déplace et la mise à jour des bases de données engendre un trafic de signalisation important sur l'interface radio et dans le réseau.

De manière équivalente, les équipements mobiles qui comportent des moyens d'établissement de connexions de données (comme actuellement la quasi-totalité des téléphones mobiles), vont, en plus des procédures mentionnés ci-dessus, réaliser les mêmes procédures pour le domaine de données (PS - Packet Switched). Il s'agit de la procédure de mise à jour de zone de routage (Routing area update) et les bases de données impliquées sont le SGSN (Serving GPRS Support Node) et le HLR (Home Location Register).

D'autres équipements mobiles n'ont pas la communication téléphonique comme fonction principale. Ces derniers n'ont donc pas besoin d'être joignables à tout moment mais il est nécessaire de pouvoir établir une connexion le plus rapidement possible avec le réseau pour les utiliser en cas de besoin. Sans besoin de rapidité à la connexion, sur sollicitation d'une application, l'équipement mobile doit se comporter comme tout équipement mobile lors de sa mise sous tension et il est nécessaire d'attendre la fin des processus de « sélection de réseau » et « de sélection de cellules » pour que l'application de l'équipement mobile soit réellement opérationnelle.

La présente invention a pour but de supprimer un ou plusieurs inconvénients de l'art antérieur, et propose un équipement mobile réveillé sur initiative d'un utilisateur ou par un événement déclenchant permettant d'assurer un usage immédiat dès déclenchement de la connexion avec un réseau et une diminution des ressources utilisées sur le réseau.

Pour atteindre ce but, l'équipement mobile comprenant une interface de préférence prévue pour l'utilisateur, une carte d'accès de préférence aux services de communication, des moyens de mémorisation d'informations, des moyens d'émission et de réception pour communiquer à travers un réseau, des moyens de gestion et de commande destinés à la gestion des ressources, de l'itinérance et à la commande de l'établissement des connexions, ledit équipement mobile étant caractérisé par le fait qu'il est apte à fonctionner, après sa mise sous tension et une connexion préalable ou pas au réseau, selon un premier mode dit « écoute » dans lequel l'équipement mobile a un impact réduit de signalisation sur le réseau et un second mode dit « standard » dans lequel l'équipement mobile fonctionne comme un équipement mobile standard, le passage du mode « écoute » au mode de fonctionnement « standard » étant réalisé par un moyen de déclenchement automatique ou manuel prévu sur l'équipement mobile.

Selon une autre particularité, les moyens de réception et d'émission de l'équipement mobile sont aptes à communiquer à travers des réseaux de type « GSM » ou de type « UMTS » ou selon les nouvelles normes de téléphonie mobile (E-UTRAN défini par l'ETSI/3GPP).

Selon une autre particularité, le moyen de déclenchement manuel correspond à une initiative d'un utilisateur par action sur un dispositif de déclenchement ou par détection d'un message défini et le moyen de déclenchement automatique correspond à un événement externe détecté par ou transmis à l'équipement mobile.

Selon une autre particularité, un timer ou compteur est prévu au sein de l'équipement mobile pour autoriser une connexion au réseau à des moments prédéfinis.

Selon une autre particularité, les moyens de mémorisation de l'équipement mobile sont aptes à stocker des informations relatives au réseau et à la cellule appropriés lorsque l'équipement mobile est en mode « écoute », lesdites informations relatives au réseau et à la cellule étant utilisées par des moyens de gestion et de commande de l'équipement mobile dès le déclenchement, via le moyen de déclenchement, du mode de fonctionnement « standard » de l'équipement mobile pour permettre une connexion rapide au réseau et une utilisation rapide de l'équipement mobile.

Selon une autre particularité, les moyens de gestion et de commande comportent une partie logicielle destinée au mode « écoute » et apte à sélectionner un réseau approprié selon une procédure « de sélection de réseau » puis une cellule appropriée selon une procédure « de sélection de cellules » et une partie logicielle destinée au mode de fonctionnement « standard » et apte à déclencher le signalement de la position par mise à jour de la localisation de l'équipement mobile au réseau selon une procédure de mise à jour de localisation ou d'attachement au réseau connue sous le nom « IMSI Attach » et respectivement pour un domaine paquet par les procédures « GPRS Attach » et mise à jour de routage « Routing Area Update ».

Un terminal ou équipement mobile supportant les connexions de données effectuera en plus et de manière similaire les procédures de mise à jour de routage ou d'attachement au réseau « Attach Request ».

Un autre but est atteint en proposant un procédé de fonctionnement de l'équipement mobile caractérisé en ce qu'il comprend :
- une procédure « de sélection du réseau », après une étape préalable ou non, effectuée par un utilisateur, de choix du mode de sélection automatique ou manuelle du réseau, et dans le cas d'un mode de sélection manuelle du réseau, une étape préalable de sélection manuelle du réseau par l'utilisateur ;
- une fois le réseau sélectionné, une procédure « de sélection de cellules » ;
   les procédures de « sélection de réseau » et de « sélection de cellules » (mentionnées dans les deux points ci-dessus) étant déclenchées par l'équipement mobile en mode « écoute » après sa mise sous tension et les informations relatives au réseau trouvé et à la cellule appropriée étant mémorisées dans les moyens de mémorisation de l'équipement mobile ; et
- une procédure de mise à jour de la localisation de l'équipement mobile ou d'attachement au réseau connue sous le nom « IMSI Attach » et respectivement pour le domaine paquet des procédures « GPRS Attach » et mise à jour de routage déclenchées par une procédure de « gestion des connexions » de façon à ce que l'équipement mobile s'accroche au réseau pour réaliser les opérations auxquelles il est destiné (un équipement mobile intégrant les fonctions de connexion de données déclenchera également une telle procédure) ;
   la procédure de « gestion des connexions » (mentionnée ci-dessus) étant déclenchée par l'équipement mobile seulement après l'activation des moyens de déclenchement automatique ou manuel du fonctionnement en mode « standard » de l'équipement mobile.

Selon une autre particularité, la procédure « de sélection du réseau » lors du fonctionnement de l'équipement mobile en mode « écoute » consiste à trouver le réseau disponible qui a la plus haute priorité et à mémoriser les informations relatives au réseau trouvé dans les moyens de mémorisation de l'équipement mobile.

Selon une autre particularité, la procédure « de sélection de cellules » lors du fonctionnement de l'équipement mobile en mode « écoute » consiste à trouver la cellule appropriée et à mémoriser les informations relatives à ladite cellule appropriée dans les moyens de mémorisation de l'équipement mobile pour connecter rapidement l'équipement mobile au réseau trouvé lorsque l'équipement mobile passe en mode de fonctionnement « standard ».

Un autre but est atteint en proposant une utilisation de l'équipement mobile, caractérisée en ce que l'équipement mobile est destiné à être embarqué dans tout dispositif mobile destiné à ne pas être appelé mais à se connecter au réseau sur un événement déclencheur interne ou externe.

Selon une autre particularité, l'équipement mobile est embarqué dans un véhicule automobile pour générer un appel d'urgence à un centre d'appel d'urgence selon sa définition standard.

Selon une autre particularité, l'équipement mobile est embarqué dans un module ou console de jeux pour permettre les mises à jour de l'application utilisée par les jeux à des moments prédéfinis.

Selon une autre particularité, l'équipement mobile est embarqué dans un système d'alarme pour générer un signal d'alarme à un centre de surveillance si nécessaire.

Selon une autre particularité, dès le déclenchement manuel ou automatique, l'équipement mobile alors en mode « écoute » est réveillé et passe en mode de fonctionnement « standard » pour se connecter rapidement au réseau approprié et envoyer un ensemble de données ou établir une connexion selon le schéma prévu pour cette application.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :
- la figure 1 représente un schéma bloc de l'équipement mobile selon l'invention ;
- la figure 2 représente un schéma extrait de la spécification technique « 3GPP TS 23.122 » modifié pour illustrer le procédé de mise en oeuvre de l'équipement mobile en mode « écoute » ;
- la figure 3 représente une procédure de sélection du réseau extraite de la spécification technique « 3GPP TS 23.122 » modifiée pour illustrer les apports de l'invention ;
- la figure 4 représente une procédure de sélection de cellules extraite de la spécification technique « 3GPP TS 43.022 », c'est-à-dire pour un réseau de type « GSM », visant à illustrer les modifications apportées par l'invention ; et
- la figure 5 représente une procédure de sélection de cellules extraite de la spécification technique « 3GPP TS 25.3043 », c'est-à-dire pour un réseau de type « UMTS », modifiée pour illustrer les apports de l'invention.

L'invention va à présent être décrite en référence aux figures précédemment citées.

La présente invention concerne un équipement mobile (1), associé avec un autre dispositif tel qu'une centrale de surveillance, par exemple, de domicile ou encore de chauffage centrale, une alarme, un véhicule automobile, etc. dont la fonction principale n'est pas la communication téléphonique. Cet équipement mobile (1) est réveillé sur initiative d'un utilisateur ou par déclenchement d'un événement extérieur. L'équipement mobile (1) sera alors utilisé pour transmettre des données provenant de l'autre dispositif ou initier un appel de façon automatique (ceci selon le schéma de service prédéfini). Ces données peuvent concerner des événements d'alarme, des événements de collision et, en général, un identifiant du dispositif ou du véhicule automobile. Par exemple, l'appel peut mettre en relation l'occupant d'une voiture avec un centre de secours, la transmission de données pouvant se faire en parallèle.

La présente invention est prévue pour des réseaux de type GSM (Global System for Mobile) ou UMTS (Universal Mobile Telecommunication System). Un fonctionnement similaire sera possible pour les systèmes radio dits « LTE » (Long Term Evolution) ou E-UTRAN (Evolved UTRAN) en cours de définition au niveau international par l'organisme ETSI/3GPP.

Il est bon de rappeler, ici, l'architecture des réseaux de type « GSM » et « UMTS ».

Dans les réseaux mobiles (2) (GSM et UMTS), l'architecture se compose d'une station de base (BTS Base Transceiver Station en GSM, Node B en UMTS) qui est en charge de la liaison radio avec l'équipement mobile (1). La station de base se compose, essentiellement, d'un élément interface avec une station la contrôlant appelée contrôleur (BSC Base Station Controller en GSM, RNC Radio Network Controller en UMTS), d'un émetteur/récepteur et d'une antenne de façon à former ce qu'on appelle une cellule. La station de base est apte à activer et désactiver un canal radio, chiffrer le contenu à transmettre, coder/décoder, moduler/démoduler un signal radio, contrôler la liaison radio, surveiller le niveau et la qualité de réception, contrôler la puissance d'émission.

Le contrôleur (BSC en GSM, RNC en UMTS) est apte à commander une ou plusieurs station(s) de base et est relié à un ou plusieurs MSC (Mobile Switching Center) et à un ou plusieurs SGSN (Serving GPRS Support Node). Le contrôleur (BSC en GSM, RNC en UMTS) décide de l'activation/désactivation d'un canal vers un équipement mobile (1), de la puissance d'émission des stations de base et des équipements mobiles (1), gère les changements de cellules, encore appelés « handover », et concentre le trafic en provenance des stations de base.

Le MSC est chargé du routage dans le réseau pour les appels circuit (par exemple, pour la voix), de l'interconnexion avec les autres réseaux et de la coordination des appels. Le MSC est en charge de plusieurs contrôleurs et concentre les flux de trafic en provenance de ces contrôleurs. En outre, chaque MSC est associé à une base de données appelée VLR (Visitor Location Register) qui contient pour tous les abonnés présents dans le territoire desservi par le MSC, leur profil et la zone de localisation où ils se trouvent. Le SGSN est chargé du routage dans le réseau pour les connexions de données (par exemple, connexions Internet), de la coordination des sessions de données et de la connexion vers un GGSN (Gateway GPRS Support Node) qui est lui-même chargé de l'interconnexion avec d'autres réseaux. En outre, à chaque SGSN est intégrée une base de données similaire au VLR qui contient des informations équivalentes à celles du VLR, par exemple, la zone de localisation est remplacée par la zone de routage. Une autre base de données appelée HLR (Home Location Register) est reliée au MSC et au SGSN : elle contient les profils et les localisations grossières d'abonnés du réseau (2).

Dans la suite de cette invention, il est fait référence de manière explicite aux procédures du domaine circuit (CS) des réseaux mobiles, tandis que les procédures correspondantes du domaine paquet (PS) ne sont pas mentionnées, même si elles sont déclenchées de façon similaire aux déclenchements du domaine circuit. Ainsi, un mobile s'attache au réseau par les procédures de mise à jour de localisation ou « IMSI Attach » pour le domaine CS, et par la procédure « Attach Request » pour le domaine PS. A la procédure de mise à jour de localisation (Location Area Update) du domaine CS correspond la procédure de mise à jour de routage (Routing Area Update) du domaine PS. Le détachement du réseau se fait par la procédure « IMSI Detach » dans le domaine CS et par la procédure « GPRS Detach » dans le domaine PS. Ces procédures ne sont pas modifiées par la présente invention (elles sont définies dans les normes ETSI, et en particulier dans la norme 3GPP TS 24.008).

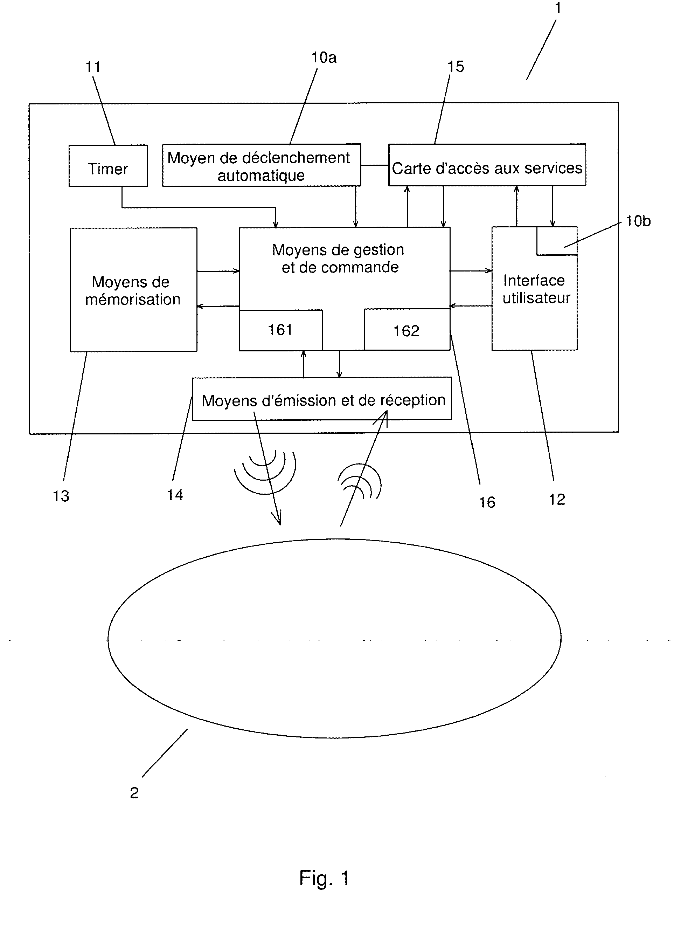

En référence à la figure 1, l'équipement mobile (1) mis sous tension est capable de fonctionner selon deux modes, un premier mode dit « écoute » dans lequel l'équipement mobile (1) a un impact réduit de signalisation sur un réseau (2) et un second mode de fonctionnement dit « standard » dans lequel l'équipement mobile (1) fonctionne comme un équipement mobile standard, c'est-à-dire de façon conforme aux normes ETSI. Le fonctionnement en mode « écoute » de l'équipement mobile (1) sera décrit dans la suite de la description.

Dès la mise sous tension de l'équipement mobile (1) au moyen d'une interface utilisateur (12) ou de façon automatique, l'équipement mobile (1) soit ne se connecte pas au réseau (2) soit se connecte une fois au réseau (2), puis passe en mode « écoute ».

Lorsque l'équipement mobile (1) est mis sous tension pour se connecter au réseau, il déclenche les procédures de « sélection de réseau » et « de sélection de cellules » pour sélectionner, respectivement, un réseau (2) et une cellule sur laquelle il cale ses paramètres radio puis signale sa position au réseau (2) selon la procédure de mise à jour de la localisation (location area update) ou d'attachement au réseau (2) connue sous le nom « IMSI Attach » (et respectivement pour le domaine PS). Enfin, l'équipement mobile (1) signale au réseau (2) trouvé son détachement selon la procédure de détachement au réseau (2) connue sous le nom « IMSI Detach » (et respectivement pour le domaine PS) lorsque l'équipement mobile (1) est mis hors tension.

Lorsque l'équipement mobile (1) est mis sous tension, la procédure d'attachement au réseau (2) connue sous le nom « IMSI Attach » est destinée à « attacher » l'équipement mobile (1) à sa zone de localisation, et signaler ainsi au réseau (2) que celui-ci est apte à recevoir des appels. Pour ce faire, l'équipement mobile (1) envoie un message au réseau (2) pour indiquer qu'il est entré dans un état d'attente. Le VLR vérifie sa base de données pour déterminer s'il y a un enregistrement existant de l'abonné. Si aucun enregistrement n'est trouvé, le VLR échange des messages avec le HLR (ou éventuellement avec un ancien VLR) afin d'obtenir les informations (droits, données d'authentification, etc.) concernant l'abonné. Les informations obtenues sont stockées dans la base de données du VLR. Puis un message d'acquittement est envoyé à l'équipement mobile (1). Les procédures similaires se déroulent pour le domaine PS.

La procédure de détachement au réseau connue sous le nom « IMSI Detach » est destinée à « détacher » l'équipement mobile (1) du réseau (2). Pour ce faire, l'équipement mobile (1) envoie un message « IMSI Detach » à un centre de commutation des équipements mobiles (en anglais, MSC (Mobile Switching Center)) du réseau (2). Les procédures similaires se déroulent pour le domaine PS.

Le passage du mode dit « écoute » au mode de fonctionnement « standard» de l'équipement mobile (1) est déclenché par un moyen de déclenchement automatique (10a) ou manuel (10b) prévu sur l'équipement mobile (1).

Le déclenchement (10b) manuel correspond à une initiative d'un utilisateur qui peut activer un dispositif de déclenchement, par exemple et de manière non limitative, par une action sur un bouton de déclenchement ou par détection d'un message défini.

Le déclenchement (10a) automatique correspond à un événement externe détecté par ou transmis à l'équipement mobile (1) comme, par exemple et de manière non limitative, la réception d'un message textuel (par exemple, SMS) défini pour, par exemple, mettre à jour certaines informations mémorisées dans une carte (15) de l'équipement mobile (1) permettant l'accès aux services de communication ou permettre à l'utilisateur d'accéder à certains services auxquels il est abonné.

Un timer ou compteur (11) peut également être prévu au sein de l'équipement mobile (1) pour autoriser une connexion au réseau (2) à des moments prédéfinis, par exemple et de manière non limitative, pour mettre à jour certaines informations mémorisées dans une carte (15) de l'équipement mobile (1) permettant l'accès aux services de communication ou permettre à l'utilisateur d'accéder à certains services auxquels il est abonné. D'autres moyens de déclenchement peuvent être envisagés pour autoriser une connexion au réseau (2) à des moments prédéfinis.

L'équipement mobile (1) peut comporter l'interface (12) prévue pour l'utilisateur avec le moyen de déclenchement (10b) manuel pour que l'équipement mobile (1) puisse passer, manuellement, du mode « écoute » au mode de fonctionnement « standard ». Cette interface utilisateur (12) peut comporter, notamment, un écran d'affichage et un clavier.

L'équipement mobile (1) comporte des moyens de mémorisation (13) pour mémoriser des informations. Par exemple et de manière non limitative, les informations mémorisées concernent le réseau (2) trouvé selon une procédure de « sélection de réseau » déclenchée par l'équipement mobile (1) dès la mise sous tension de l'équipement mobile (1). Les informations mémorisées concernent, en outre, la cellule sélectionnée selon une procédure de « sélection de cellules » déclenchée par l'équipement mobile (1) dès sa mise sous tension une fois que le réseau est trouvé, la cellule sélectionnée étant celle sur laquelle l'équipement mobile (1) se calera lorsqu'il passera en mode de fonctionnement « standard » suite à l'initiative d'un utilisateur ou par un déclenchement externe.

Les informations mémorisées relatives à la cellule sont, par exemple, l'identifiant de cellule appelé Cell ID, les informations BCCH ou CPBCCH pour une cellule GSM ou le code de la zone de localisation (LAC, Location Area Code ou RAC, Routing Area Code), l'indicatif du pays et l'indicatif du réseau trouvé (2). Les informations qui sont mémorisées sont définies dans les spécifications ETSI 3GPP TS 23.122 et ETSI 3GPP TS 43.022 pour une cellule GSM et ETSI 3GPP TS 25.304 pour une cellule UMTS. Ces informations sont mises à jour selon le déplacement du dispositif mobile embarquant l'équipement mobile (1) (en suivant la périodicité d'écoute du réseau définie dans les normes ETSI).

Ces informations relatives au réseau (2) et à la cellule et mémorisées dans les moyens de mémorisation (13) de l'équipement mobile (1) sont utilisées par des moyens de gestion et de commande (16) de l'équipement mobile (1) mis sous tension dès le déclenchement, via le moyen de déclenchement (10a ou 10b), du mode de fonctionnement « standard » de l'équipement mobile (1) pour assurer une connexion rapide au réseau (2) et une utilisation rapide de l'équipement mobile (1).

Par exemple et de façon avantageuse, dans le cas d'une collision automobile, un appel pourra être émis selon sa définition standard (norme européenne ou autre définition) de façon quasi-immédiate sans que l'équipement mobile (1) ait à effectuer les procédures de recherche de réseau et de cellule. Dans les procédures de sélection de réseau et de sélection de cellules, l'équipement mobile (1) aura à déclencher les procédures d'attachement au réseau.

En outre, l'équipement mobile (1) comporte des moyens d'émission et de réception (14) pour communiquer à travers le réseau (2) encore appelé « PLMN » (Public Land Mobile Network) pour la téléphonie cellulaire, par exemple et de manière non limitative, un réseau de type « GSM » ou un réseau de type « UMTS ».

La carte d'accès aux services (15) de l'équipement mobile (1) permettant l'accès aux services de communication est destinée à mémoriser toutes les données concernant un abonné ou utilisateur de l'équipement mobile (1) et notamment les processus d'authentification et les informations relatives à l'abonnement. Cette carte (15) permettant l'accès aux services de communication est, par exemple et de manière non limitative, une carte de type UICC (Universal Integrated Circuit Card) comprenant une application de type « SIM » (Suscriber Identity Module) ou une application de type « USIM » (Universal Suscriber Identity Module), voire toute application définie ultérieurement. La carte de type « UICC » permet de donner accès aux réseaux de type « GSM » ou « UTMS » et d'assurer l'intégrité et la sécurité des données de l'utilisateur. Dans le cas d'un équipement mobile (1) utilisé à des fins d'appels d'urgence uniquement (tels que définis dans les normes ETSI 3GPP), ces appels pourront être émis même en l'absence de carte UICC.

Les moyens de gestion et de commande (16) de l'équipement mobile (1) sont destinés à la gestion des ressources, à la commande de l'établissement des connexions et à la gestion de l'itinérance. Les moyens de gestion et de commande (16) comportent une partie « logicielle » (161) destinée au mode écoute » et apte à sélectionner un réseau approprié selon une procédure de « sélection de réseau » déclenchée par l'équipement mobile (1) dès sa mise sous tension et une cellule sur laquelle l'équipement mobile (1) effectuera sa procédure d'attachement lorsqu'il passera en mode de fonctionnement « standard », la cellule étant sélectionnée selon une procédure de « sélection de cellule » déclenchée par l'équipement mobile (1) dès sa mise sous tension une fois que le réseau approprié est trouvé. Ces procédures de « sélection de réseau » et de « sélection de cellules » seront décrites dans la suite de la description.

Les moyens de gestion et de commande (16) comportent une autre partie « logicielle » (162) destinée au mode de fonctionnement « standard » de l'équipement mobile (1) et apte à déclencher le signalement de la position de l'équipement mobile (1) au réseau (2) sélectionné selon la procédure de mise à jour de localisation (location area update) ou d'attachement au réseau (2) connue sous le nom « IMSI Attach » décrite précédemment (et respectivement pour le domaine PS).

Les informations relatives au réseau (2) et à la cellule trouvés, respectivement, selon la procédure de « sélection de réseau » et la procédure de « sélection de cellules » sont stockées dans les moyens de mémorisation (13) de l'équipement mobile (1) pour permettre à l'équipement mobile (1) de se connecter au réseau (2) le plus rapidement possible lorsqu'il passe du mode « écoute » au mode de fonctionnement « standard ».

De même ces moyens de mémorisation (13) peuvent mémoriser des informations provenant d'un dispositif externe (alarme, centrale de surveillance, etc. ou véhicule automobile) auquel est associé l'équipement mobile (1). Lorsque l'équipement mobile (1) fonctionne en mode « écoute », l'équipement mobile (1) ne s'accroche pas au réseau (2) en ne déclenchant pas la procédure de mise à jour de localisation (location area update) connue ou d'attachement au réseau (2) connue sous le nom « IMSI Attach » et décrite précédemment consistant à signaler au réseau sa position (et respectivement pour le domaine PS). En mode « écoute », l'équipement mobile (1) effectue cette opération de mémorisation à chaque fois que les données relatives aux cellules ou réseau sélectionnés sont changées.

En outre, l'équipement mobile (1) peut comporter d'autres éléments adaptés de façon à ce que l'équipement mobile (1) embarqué dans le dispositif externe soit conforme aux réglementations prévues pour l'utilisation de cet autre dispositif. Par exemple et de manière non limitative, si l'équipement mobile (1) est embarqué dans un véhicule automobile, il devra être résistant aux chocs.

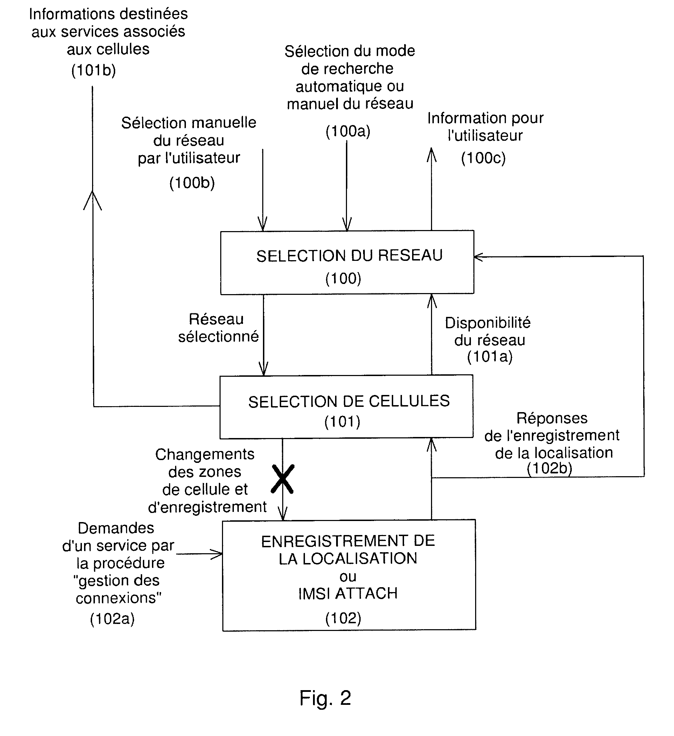

En référence à la figure 2, nous allons, à présent, décrire le procédé de fonctionnement de l'équipement mobile (1) en mode « écoute ». Ce procédé, représenté à la figure 2, est basé sur la spécification technique référencée « 3GPP TS 23.122 » définie par l'ETSI (European Telecommunications Standards Institute). Cette spécification technique est connue et prévue pour des réseaux de type « GSM » ou « UMTS » en mode de fonctionnement « standard ». Sur la figure 2, l'invention apparaît par la connexion barrée qui consiste à s'attacher au réseau (2) et enregistrer la localisation de l'équipement mobile (1).

Dés sa mise sous tension, l'équipement mobile (1) émet et reçoit les commandes usuelles, notamment, déclenche une procédure de « sélection de réseau » et une procédure « de sélection de cellules » mais lorsqu'il est en mode « écoute », il ne s'attache pas au réseau (2) en n'émettant pas la demande de mise à jour de la localisation (location update area) ou la commande appelée « IMSI Attach » décrite précédemment (et respectivement pour le domaine PS).

En effet, le procédé de fonctionnement de l'équipement mobile (1) en mode « écoute » comprend une procédure de « sélection du réseau » (figure 2, bloc 100). Cette procédure de « sélection de réseau » (100) s'effectue de façon automatique à la mise sous tension de l'équipement mobile (1), cette mise sous tension pouvant être liée à la mise sous tension d'un autre dispositif. Dans le cas d'un choix de l'utilisateur de sélection manuelle de réseau effectuée au travers de l'étape « de sélection du mode de sélection automatique ou manuelle du réseau (2) » (figure 2, flèche 100a), via l'interface utilisateur (12) et une étape préalable « de sélection manuelle du réseau (2) » (figure 2, flèche 100b) est effectuée par l'utilisateur via l'interface utilisateur (12). Puis, une fois le réseau (2) sélectionné automatiquement ou manuellement, une procédure « de sélection de cellules » (figure 2, bloc 101) est mise en oeuvre. Les informations relatives au réseau (2) et à la cellule sélectionnés sont mémorisées dans les moyens de mémorisation (13) de l'équipement mobile (1) de façon à ce que l'équipement mobile (1) puisse se connecter rapidement au réseau (2) si nécessaire.

Puis, selon l'invention, lorsque l'équipement mobile (1) est en mode « écoute », la procédure « d'enregistrement de la localisation », encore appelée mise à jour de la localisation (location update area) ou d'attachement au réseau (2) connue sous le nom « IMSI Attach » (figure 2, bloc 102) (et respectivement pour le domaine PS) est déclenchée, uniquement, par la partie « logicielle » destinée au mode « standard » des moyens de gestion et de commande (16) de l'équipement mobile (1) sur demande par une autre procédure appelée « gestion des connexions » (en anglais, Connection Management, CM) (figure 2, flèche 102a). La procédure de « gestion des connexions » est déclenchée si le moyen de déclenchement automatique (10a) ou manuel (10b) de l'équipement mobile (1) a été activé. L'équipement mobile (1) passe alors du mode « écoute » au mode de fonctionnement « standard ».

De façon connue, une fois que la localisation de l'équipement mobile (1) est signalée au réseau, la procédure «d'enregistrement de la localisation » (figure 2, bloc 102) envoie les réponses de l'enregistrement ou mise à jour de la localisation (figure 2, flèche 102b) d'une part, à la procédure « de sélection de cellules » (figure 2, bloc 101) et d'autre part, à la procédure « de sélection de réseau (2) » (figure 2, bloc 100). La procédure « de sélection du réseau (2) » (figure 2, bloc 100) reçoit, en parallèle, de la part de la procédure « de sélection de cellules » (figure 2, bloc 101), une information (figure 2, flèche 101 a) relative à la disponibilité du réseau (2). La procédure « de sélection du réseau (2) » (figure 2, bloc 100) est apte à fournir une information (figure 2, flèche 100c) relative au réseau sélectionné via l'interface utilisateur (12). Par exemple, cette information relative au réseau peut s'afficher sur l'écran de l'équipement mobile (1) de l'utilisateur, dans le cas où l'interface utilisateur (12) comporte un écran.

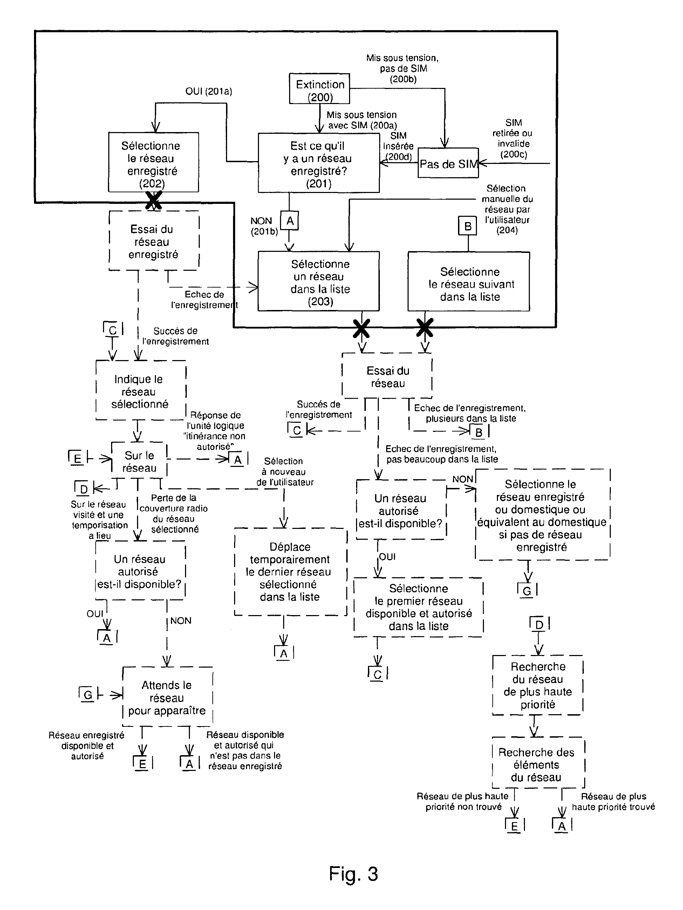

En référence à la figure 3, nous allons à présent décrire la procédure « de sélection du réseau » (100) dans le cas du fonctionnement de l'équipement mobile (1) en mode « écoute ».

La procédure (100) de sélection du réseau (2) représentée à la figure 3 est basée sur la spécification technique référencée « 3GPP TS23.122 » définie par l'ETSI. Cette spécification est connue et est prévue pour les réseaux de type « GSM » ou « UMTS ». Sur la figure 3, l'invention apparaît par les connexions barrées qui consistent à sélectionner le « meilleur » réseau (2), comme défini dans cette spécification et à enregistrer, dans les moyens de mémorisation (13) de l'équipement mobile (1), le réseau (2) sélectionné. De cette façon l'équipement mobile (1) pourra identifier les cellules radio présentes et pourra, lorsque nécessaire, s'attacher rapidement au réseau (2).

La procédure « de sélection de réseau » (100) comporte une première partie relative au fonctionnement de l'équipement mobile (1) en mode « écoute » représentée en trait continu sur la figure 3 et une deuxième partie relative au fonctionnement de l'équipement mobile (1) en mode « standard » représentée par l'ensemble de la figure 3 (traits pleins et traits en pointillé), définie dans la spécification « 3GPP TS 23.122 ». La deuxième partie destinée au fonctionnement de l'équipement mobile (1) en mode « standard » représentée en pointillé ne sera pas décrite puisqu'elle est connue.

Il est à noter, que dans l'exemple représenté, la carte (15) permettant l'accès aux services de communication de l'équipement mobile (1) est une carte « SIM ».

L'équipement mobile (1), est à l'origine éteint ce qui correspond au mode dit « d'extinction » (figure 3, bloc 200).

Lorsque l'utilisateur a choisi le mode de sélection automatique du réseau pendant l'étape préalable du mode de sélection automatique ou manuelle de réseau (figure 2, flèche 100b) et que l'équipement mobile (1) mis sous tension présente une carte d'accès aux services de communication valide (15) (figure 3, flèche 200a) la première étape de la procédure (100) recherche, s'il existe, un réseau enregistré dans la carte d'accès (15) aux services de communication de l'équipement mobile (1) (figure 3, bloc 201). Si le réseau est enregistré dans la carte d'accès (15) aux services de communication de l'équipement mobile (1) (figure 3, flèche 201 a), l'équipement mobile (1) sélectionne le réseau enregistré (figure 3, bloc 202) et mémorise les informations relatives à ce réseau (2) dans les moyens de mémorisation (13) de l'équipement mobile (1).

Si le réseau n'est pas enregistré dans la carte d'accès (15) aux services de communication de l'équipement mobile (1) (figure 3, flèche 201 b), l'équipement mobile (1) sélectionne un réseau de priorité la plus élevée dans une liste (figure 3, bloc 203) préétablie de réseaux classés par ordre de priorité et stockée dans la carte valide permettant l'accès aux services de communication (15) de l'équipement mobile (1). Une fois le réseau sélectionné dans cette liste, l'équipement mobile (1) mémorise les informations relatives à ce réseau dans les moyens de mémorisation (13) de l'équipement mobile (1).

Si, l'équipement mobile (1) mis sous tension ne présente pas de carte d'accès aux services de communication valide (15) (figure 3, flèche 200b) ou bien la carte d'accès est retirée ou invalide (figure 3, flèche 200c), la procédure (100) de recherche de réseau de la partie logicielle (161) des moyens de gestion et de commande (16) de l'équipement mobile (1) envoie une information de demande d'insertion de la carte d'accès (15) aux services de communication. Cette information s'affiche sur l'écran de l'interface utilisateur (12) de l'équipement mobile (1) (figure 3, flèche 200d) afin que l'utilisateur insère une carte d'accès (15) aux services de communication valide dans l'équipement mobile (1) de façon à ce que l'équipement mobile (1) reprenne la procédure (100) de « recherche de réseau » au bloc 201. Dans le cas d'un usage pour des appels d'urgence uniquement tels que définis dans les normes ETSI, l'équipement mobile (1) pourra effectuer la sélection de réseau selon l'invention sans afficher d'erreur à l'utilisateur. Lorsque l'utilisateur a choisi le mode de sélection manuelle du réseau (figure 3, flèche 204) pendant l'étape préalable du mode de sélection automatique ou manuelle de réseau (figure 2, flèche 100b), l'équipement mobile (1) affiche la liste préétablie de réseaux classés par ordre de priorité et stockée dans la carte d'accès aux services de communication valide (15) de l'équipement mobile (1) de façon à ce que l'utilisateur en choisisse un et que l'équipement mobile (1) mémorise les informations relatives à ce réseau dans les moyens de mémorisation (13) de l'équipement mobile (1).

Si l'équipement mobile (1) est réveillé par le moyen de déclenchement (10a, 10b), la procédure « de recherche de réseau » (100) traitera la deuxième partie représentée en pointillé.

De façon avantageuse, l'équipement mobile (1) trouve le réseau disponible qui a la plus haute priorité selon des critères connus et définis dans les normes spécifiques définies par l'ETSI mais l'équipement mobile (1) ne s'y attache pas.

Une fois que le réseau (2) le plus prioritaire est trouvé par l'équipement mobile (1), ce dernier cherche la cellule de réseau (2), selon la procédure « de sélection de cellules » (101). La cellule trouvée sera celle sur laquelle l'équipement mobile (1) se campera lorsqu'il passera en mode de fonctionnement « standard » si cela est nécessaire.

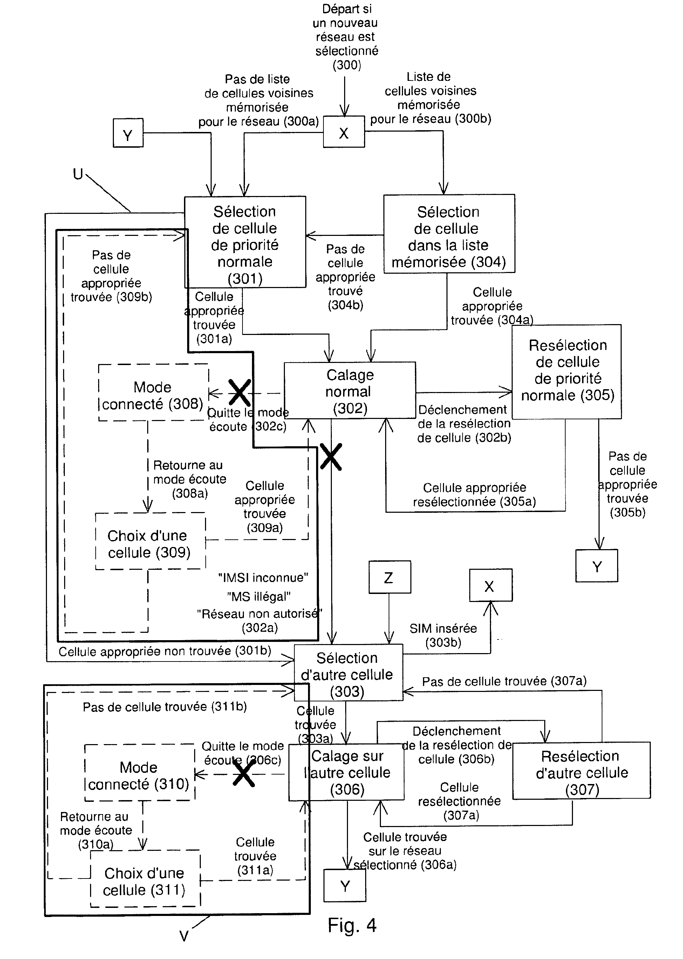

La procédure (101) « de sélection de cellules », représentée à la figure 4, est basée sur la spécification technique référencée « 3GPP TS 43.022 » définie par l'ETSI. Cette spécification est connue et est prévue pour les réseaux de type « GSM ».

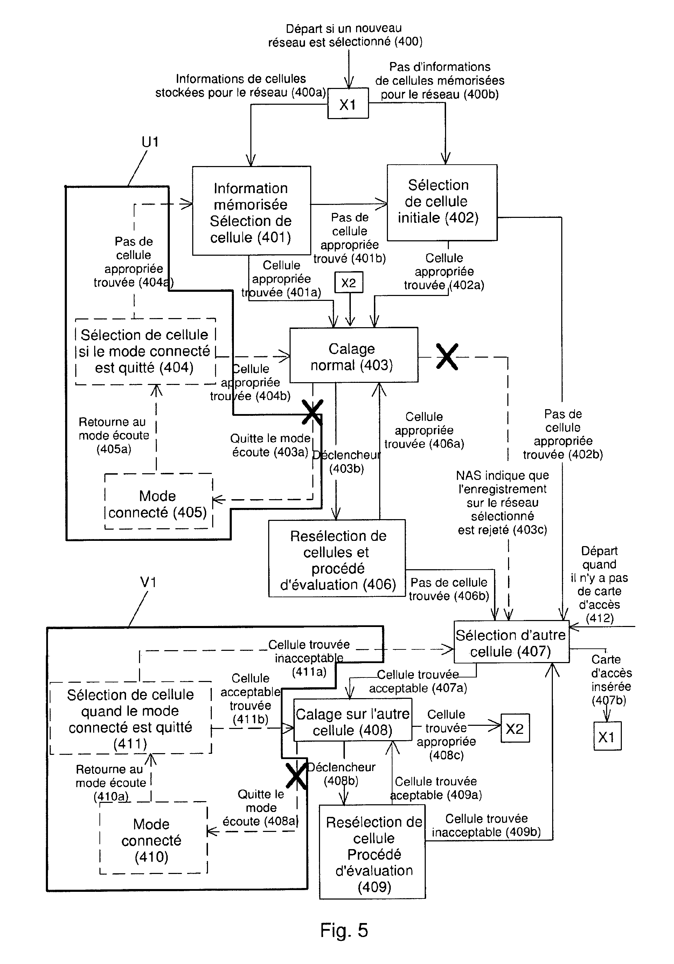

Une autre spécification technique référencée « 3GPP TS 25.304 » définie par l'Institut européen des normes de télécommunications (en anglais European Telecommunications Standards Institute ETSI) est représentée à la figure 5 pour illustrer la procédure (101) « de sélection de cellules » pour les réseaux de type « UMTS. Il est à noter que pour le réseau de type « UMTS », les procédures sont similaires mais les références des spécifications techniques sont différentes et la terminologie peut également changer, tout en restant dans l'esprit de l'invention revendiquée.

En référence à la figure 5, nous allons donc à présent décrire la procédure (101) « de sélection de cellules » de l'équipement mobile (1) en mode « écoute » pour un réseau « UMTS ».

Si un nouveau réseau (2) est sélectionné par l'équipement mobile (1) (figure 5, flèche 400 et point de départ X1) et qu'il n'existe pas de liste contenant les informations de cellules pour ledit nouveau réseau (2) (figure 5, flèche 400b) et mémorisée dans la carte d'accès (15) aux services de communication alors une cellule initiale est sélectionnée (figure 5, bloc 402) par l'équipement mobile (1).

Si un nouveau réseau (2) est sélectionné par l'équipement mobile (1) (figure 5, flèche 400 et point de départ X1) et qu'il existe une liste contenant les informations de cellules pour ledit nouveau réseau (2) (figure 5, flèche 400a) et mémorisée dans la carte d'accès (15) aux services de communication de l'équipement mobile (1) alors l'équipement mobile (1) sélectionne une cellule (figure 5, bloc 401) dans cette liste préétablie de cellules et mémorisée dans la carte d'accès valide (15) aux services de communication de l'équipement mobile (1).

A partir du bloc de sélection de cellule dans la liste mémorisée (401) dans la carte d'accès valide (15) aux services de communication de l'équipement mobile (1), si la cellule appropriée est trouvée (figure 5, flèche 401a), l'équipement mobile (1) mémorise les informations relatives à cette cellule dans les moyens de mémorisation (13) de l'équipement mobile (1) et se cale normalement sur cette cellule appropriée trouvée (figure 5, bloc 403). A partir du bloc de calage normal de l'équipement mobile (1) sur la cellule appropriée (403), si un déclencheur (figure 5, flèche 403b) est activé, l'équipement mobile (1) déclenche une resélection de cellules et un procédé d'évaluation (figure 5, bloc 406).

A partir du bloc de sélection de cellule dans la liste mémorisée (401) dans la carte d'accès (15) aux services de communication de l'équipement mobile (1), si la cellule appropriée n'est pas trouvée (figure 5, flèche 401 b), une cellule initiale est sélectionnée (figure 5, bloc 402) par l'équipement mobile (1).

A partir du bloc de sélection de cellule initiale (402), si une cellule appropriée est trouvée (figure 5, flèche 402a), l'équipement mobile (1) mémorise les informations relatives à cette cellule dans les moyens de mémorisation (13) de l'équipement mobile (1) et se cale normalement sur la cellule appropriée trouvée (figure 5, bloc 403).

A partir du bloc de sélection de la cellule initiale (402), si une cellule appropriée n'est pas trouvée (figure 5, flèche 402b), une autre cellule est sélectionnée (figure 5, bloc 407) par l'équipement mobile (1).

A partir du bloc de resélection de cellule (406), si la cellule appropriée n'est pas trouvée (figure 5, flèche 406b), une autre cellule est sélectionnée (figure 5, bloc 407) par l'équipement mobile (1).

A partir du bloc de resélection de cellule (406), si la cellule appropriée est trouvée (figure 5, flèche 406a), l'équipement mobile (1) mémorise les informations relatives à cette cellule dans les moyens de mémorisation (13) de l'équipement mobile (1) et se cale normalement sur la cellule appropriée trouvée (figure 5, bloc 403).

A partir du bloc de sélection d'une autre cellule (407), si la carte d'accès, dans l'exemple représenté, la carte de type « USIM » est insérée (figure 5, flèche 407b), l'équipement mobile (1) réitère les actions de la procédure (101) de « sélection de cellules » à partir du point de départ X1.

A partir du bloc de sélection d'une autre cellule (407), si une cellule acceptable est trouvée (figure 5, flèche 407a) par l'équipement mobile (1), l'équipement mobile (1) mémorise les informations relatives à cette autre cellule dans les moyens de mémorisation (13) de l'équipement mobile (1) et se cale sur l'autre cellule (figure 5, bloc 408).

A partir du bloc de calage de l'équipement mobile (1) sur l'autre cellule (408), si la cellule appropriée est trouvée sur le réseau sélectionné (figure 5, flèche 408c), l'équipement mobile (1) réitère les actions de la procédure (101) de « sélection de cellules » à partir du bloc de calage normal de l'équipement mobile (1) sur la cellule appropriée (403) (figure 5, bloc X2).

A partir du bloc de calage de l'équipement mobile (1) sur l'autre cellule (408), si un déclencheur (figure 5, flèche 408b) est activé, l'autre cellule est resélectionnée (figure 5, bloc 409) par l'équipement mobile (1).

A partir du bloc de resélection de cellule (409), si la cellule trouvée est inacceptable (figure 5, flèche 409b), une autre cellule est sélectionnée (figure 5, bloc 407) par l'équipement mobile (1).

A partir du bloc de resélection de cellule (409), si la cellule trouvée est acceptable (figure 5, flèche 409a), l'équipement mobile (1) mémorise les informations relatives à cette cellule resélectionnée dans les moyens de mémorisation (13) de l'équipement mobile (1) et se cale sur cette cellule (figure 5, bloc 408).

Il est à noter que lorsqu'il n'y a pas de carte d'accès (15) aux services de communication insérée dans l'équipement mobile (1), l'équipement mobile (1) commence la procédure de « sélection de cellules » (101) à partir du bloc de sélection d'une autre cellule (407) (figure 5, flèche 412).

En outre, lorsque l'on parle de cellule « appropriée », cela signifie que c'est une cellule sur laquelle l'équipement mobile (1) se cale. Il doit satisfaire, dans cet exemple, les critères définis dans la norme référencée « 3GPP TS 25.304 » définie par l'ETSI.

Au niveau de la transmission entre le réseau (2) et l'équipement mobile (1), la procédure (101) de « sélection de cellules » suit la description de la norme technique référencée « 3GPP TS 25.304 » définie par l'ETSI dans laquelle l'équipement mobile (1) n'effectue pas les procédures d'enregistrement sur le réseau sélectionné (2).

En effet, au début, l'équipement mobile (1) recherche une cellule qui satisfait à des contraintes (« cellule appropriée ») en vérifiant les cellules selon les critères définis dans la norme technique « 3GPP TS 25.304 » définie par l'ETSI. Si une cellule appropriée est trouvée, l'équipement mobile (1) se cale sur ladite cellule. Les cellules peuvent avoir deux niveaux de priorité, les cellules appropriées qui sont de basse priorité sur laquelle se cale l'équipement mobile (1) s'il n'y a aucune autre cellule appropriée de priorité normale. Sur la figure 5, ce sont les blocs de « sélection de cellule » (blocs 401, 402, 407).

Une fois que l'équipement mobile (1) est calé sur une cellule, l'équipement mobile (1) cherche régulièrement pour voir s'il y a une meilleure cellule en termes de critères de resélection de cellule, et s'il y a, la meilleure cellule est choisie. En outre, si un des autres critères change ou il y a une liaison descendante signalant l'échec, une nouvelle cellule est choisie. Sur la figure 5, ceux sont les blocs de « resélection de cellule » (blocs 406 et 409).

Si l'équipement mobile (1) passe du « mode écoute » au mode de fonctionnement « standard » via le moyen de déclenchement automatique (10a) ou manuel (10b) de l'équipement mobile (1), la procédure (101) de « sélection de cellules » traitera également les blocs (U1, V1) représentés en pointillé sur la figure 5.

En effet, à partir du bloc de calage normal de l'équipement mobile (1) sur une cellule (403), si l'équipement mobile (1) quitte le mode « écoute » (figure 5, flèche 403a), il se connecte au réseau (figure 5, bloc 405), par exemple, pour mettre à jour certaines informations mémorisées dans une carte d'accès (15) de l'équipement mobile (1) aux services de communication ou permettre à l'utilisateur d'accéder à certains services auxquels il est abonné, puis retourne en mode « écoute » (figure 5, flèche 405a). L'équipement mobile (1) sélectionne une cellule (figure 5, bloc 404) si l'équipement mobile (1) est déconnecté du réseau (2). A partir du bloc de choix de cellule (404), si une cellule appropriée est trouvée (figure 5, flèche 404b) par l'équipement mobile (1), l'équipement mobile (1) se cale normalement sur la cellule trouvée (figure 5, bloc 403). A partir du bloc de sélection de cellule (404), si une cellule appropriée n'est pas trouvée (figure 5, flèche 404a) par l'équipement mobile (1), l'équipement mobile (1) sélectionne une cellule (figure 5, bloc 401) et réitère les actions de la procédure (101) de « sélection de cellule » à partir du bloc (401).

A partir du bloc de calage de l'équipement mobile (1) sur une autre cellule (408), si l'équipement mobile (1) quitte le mode « écoute » (figure 5, flèche 408a), il se connecte au réseau (figure 5, bloc 410), par exemple, pour mettre à jour certaines informations mémorisées dans une carte d'accès (15) de l'équipement mobile (1) aux services de communication ou permettre à l'utilisateur d'accéder à certains services auxquels il est abonné puis retourne en mode écoute (figure 5, flèche 410a). L'équipement mobile (1) sélectionne une cellule (figure 5, bloc 411). A partir du bloc de sélection de cellule (411), si une cellule acceptable est trouvée (figure 5, flèche 411 b) par l'équipement mobile (1), l'équipement mobile (1) mémorise les informations relatives à cette autre cellule acceptable trouvée dans les moyens de mémorisation (13) de l'équipement mobile (1) et se cale sur l'autre cellule trouvée (figure 5, bloc 408). A partir du bloc de sélection de cellule (411), si une cellule trouvée est inacceptable (figure 5, flèche 411 a), l'équipement mobile (1) sélectionne une autre cellule (figure 5, bloc 407) et réitère les actions de la procédure (101) de « sélection de cellules » à partir du bloc (407).

En outre, lorsque l'équipement mobile (1) passe en mode « écoute », il ne déclenche pas la commande, représenté en pointillé, « si la NAS (Network Attach Storage) indique qu'un enregistrement sur le réseau sélectionné (2) selon la procédure « de sélection de réseau » est rejeté » (figure 5, flèche 406a), alors une autre cellule est sélectionnée (figure 5, bloc 407).

En référence à la figure 4, nous allons donc à présent décrire la procédure (101) « de sélection de cellules » de l'équipement mobile (1) en mode « écoute » pour un réseau « GSM ».

Si un nouveau réseau (2) est sélectionné par l'équipement mobile (1) (figure 4, flèche 300 et point de départ X) et qu'il n'existe pas de liste de fréquences des cellules voisines (figure 4, flèche 300a) mémorisée dans la carte d'accès (15) aux services de communication pour ce nouveau réseau (2) alors une cellule de priorité normale est sélectionnée (figure 4, bloc 301) par l'équipement mobile (1).

Si un nouveau réseau (2) est sélectionné par l'équipement mobile (1) (figure 4, flèche 300 et point de départ X) et qu'il existe une liste de fréquences de cellules voisines (figure 4, flèche 300b) mémorisée dans la carte d'accès (15) aux services de communication de l'équipement mobile (1) pour le réseau (2) alors l'équipement mobile (1) sélectionne une cellule appropriée (figure 4, bloc 304) dans une liste préétablie de cellules et mémorisée dans la carte d'accès valide (15) aux services de communication de l'équipement mobile (1).

A partir du bloc de sélection de cellule appropriée dans la liste mémorisée (304) dans la carte d'accès valide (15) aux services de communication de l'équipement mobile (1), si la cellule appropriée est trouvée (figure 4, flèche 304a), l'équipement mobile (1) mémorise les informations relatives à cette cellule dans les moyens de mémorisation (13) de l'équipement mobile (1) et se cale normalement sur cette cellule appropriée trouvée (figure 4, bloc 302).

A partir du bloc de sélection de cellule dans la liste mémorisée (304) dans la carte d'accès (15) aux services de communication de l'équipement mobile (1), si la cellule appropriée n'est pas trouvée (figure 4, flèche 304b), une cellule de priorité normale est sélectionnée (figure 4, bloc 301) par l'équipement mobile (1).

A partir du bloc de sélection de cellule de priorité normale (301), si une cellule appropriée est trouvée (figure 4, flèche 301 a), l'équipement mobile (1) mémorise les informations relatives à cette cellule dans les moyens de mémorisation (13) de l'équipement mobile (1) et se cale normalement sur la cellule appropriée trouvée (figure 4, bloc 302).

A partir du bloc de sélection de la cellule de priorité normale (301), si une cellule appropriée n'est pas trouvée (figure 4, flèche 301 b), une autre cellule est sélectionnée (figure 4, bloc 303).

A partir du bloc de calage normal de l'équipement mobile (1) sur la cellule (302), si la resélection de cellule (figure 4, flèche 302b) est déclenchée, la cellule de priorité normale est resélectionnée (figure 4, bloc 305) par l'équipement mobile (1). A partir du bloc de resélection de cellule de priorité normale (305), si la cellule appropriée est resélectionnée (figure 4, flèche 305a) par l'équipement mobile (1), l'équipement mobile (1) mémorise les informations relatives à cette cellule appropriée et resélectionnée dans les moyens de mémorisation (13) de l'équipement mobile (1) et se cale normalement sur cette cellule appropriée et resélectionnée (figure 4, bloc 302). A partir du bloc de resélection de cellule de priorité normale (305), si la cellule appropriée n'est pas trouvée (figure 4, flèche 305b), l'équipement mobile (1) réitère les actions de la procédure (101) de « sélection de cellules » à partir du bloc de sélection de la cellule de priorité normale (301) (figure 4, bloc Y).

A partir du bloc de sélection d'une autre cellule (303), si la carte d'accès, dans l'exemple représenté, la carte de type « SIM » est insérée (figure 4, flèche 303b), l'équipement mobile (1) réitère les actions de la procédure (101) de « sélection de cellules » à partir du point de départ X.

A partir du bloc de sélection d'une autre cellule (303), si la cellule est trouvée (figure 4, flèche 303a) par l'équipement mobile (1), l'équipement mobile (1) mémorise les informations relatives à cette autre cellule dans les moyens de mémorisation (13) de l'équipement mobile (1) et se cale sur l'autre cellule (figure 4, bloc 306).

A partir du bloc de calage de l'équipement mobile (1) sur l'autre cellule (306), si la cellule est trouvée sur le réseau sélectionné (figure 4, flèche 306a), l'équipement mobile (1) réitère les actions de la procédure (101) de « sélection de cellules » à partir du bloc de sélection de la cellule de priorité normale (301) (figure 4, bloc Y).

A partir du bloc de calage de l'équipement mobile (1) sur l'autre cellule (306), si la nouvelle sélection de cellule est déclenchée (figure 4, flèche 306b), l'autre cellule est resélectionnée (figure 4, bloc 307).

A partir du bloc de resélection d'une autre cellule (307), si aucune cellule n'est trouvée (figure 4, flèche 307a), l'équipement mobile (1) réitère les actions de la procédure (101) de « sélection de cellules » à partir du bloc de sélection d'une autre cellule (303).

A partir du bloc de resélection d'autre cellule (307), si la cellule est resélectionnée (figure 4, flèche 307b) par l'équipement mobile (1), l'équipement mobile (1) réitère les actions de procédure (101) de « sélection de cellules » à partir du bloc de calage de l'équipement mobile (1) sur l'autre cellule (306).

Il est à noter que les blocs de calage de l'équipement mobile (1) sur une cellule appropriée (302 et 306) consistent en ce que l'équipement mobile (1) pourvu de sa carte d'accès (15) termine la procédure de sélection/resélection de cellule et choisisse une cellule à partir de laquelle l'équipement mobile (1) est prévu pour recevoir tous les services disponibles. Il est à noter que les services peuvent être limités et que le réseau (2) ne sera pas informé de l'existence de l'équipement mobile (1) dans la cellule choisie.

En outre, lorsque l'on parle de cellule « appropriée » cela signifie que c'est une cellule sur laquelle l'équipement mobile (1) se cale. Il doit satisfaire, dans cet exemple, les critères définis dans le sous-alinéa 3.2.1 de la norme référencée « 3GPP TS 43.022 » définie par l'ETSI.

Au niveau de la transmission entre le réseau (2) et l'équipement mobile (1), la procédure (101) de « sélection de cellules » suit la description de la norme technique référencée « 3GPP TS 43.022 » » définie par l'ETSI dans laquelle l'équipement mobile (1) n'effectue pas les procédures d'enregistrement sur le réseau sélectionné (2).

En effet, au début, l'équipement mobile (1) recherche une cellule qui satisfait à des contraintes (« cellule appropriée ») en vérifiant les cellules selon les critères définis dans la norme technique « 3GPP TS 43.022 » définie par l'ETSI. Si une cellule appropriée est trouvée, l'équipement mobile (1) se cale sur ladite cellule. Les cellules peuvent avoir deux niveaux de priorité, les cellules appropriées qui sont de basse priorité sur laquelle se cale l'équipement mobile (1) s'il n'y a aucune autre cellule appropriée de priorité normale. Sur la figure 4, ce sont les blocs de « sélection de cellule » (blocs 301, 304, 303).

Une fois que l'équipement mobile (1) est calé sur une cellule, l'équipement mobile (1) cherche régulièrement pour voir s'il y a une meilleure cellule en termes de critères de resélection de cellule, et s'il y a, la meilleure cellule est choisie. En outre si un des autres critères change ou il y a une liaison descendante signalant l'échec, une nouvelle cellule est choisie. Sur la figure 4, ceux sont les blocs de « resélection de cellule » (blocs 305 et 307).

Si l'équipement mobile (1) passe du « mode écoute » au mode de fonctionnement « standard » via le moyen de déclenchement automatique (10a) ou manuel (10b) de l'équipement mobile (1), la procédure (101) de « sélection de cellules » traitera également les blocs (U, V) représentés en pointillé sur la figure 4.

En effet, à partir du bloc de calage normal de l'équipement mobile (1) sur une cellule (302), si l'équipement mobile (1) quitte le mode « écoute » (figure 4, flèche 302c), il se connecte au réseau (figure 4, bloc 308), par exemple, pour mettre à jour certaines informations mémorisées dans une carte d'accès (15) de l'équipement mobile (1) aux services de communication ou permettre à l'utilisateur d'accéder à certains services auxquels il est abonné, puis retourne en mode « écoute » (figure 4, flèche 308a). L'équipement mobile (1) sélectionne une cellule (figure 4, bloc 309). A partir du bloc de choix de cellule (309), si une cellule appropriée est trouvée (figure 4, flèche 309a) par l'équipement mobile (1), l'équipement mobile (1) se cale normalement sur la cellule trouvée (figure 4, bloc 302). A partir du bloc de choix de cellule (309), si une cellule appropriée n'est pas trouvée (figure 4, flèche 309b) par l'équipement mobile (1), l'équipement mobile (1) sélectionne une cellule normale (figure 4, bloc 301) et réitère les actions de la procédure (101) de « sélection de cellule » à partir du bloc (301).

A partir du bloc de calage de l'équipement mobile (1) sur une autre cellule (306), si l'équipement mobile (1) quitte le mode « écoute » (figure 4, flèche 306c), il se connecte au réseau (figure 4, bloc 310), par exemple, pour mettre à jour certaines informations mémorisées dans une carte d'accès (15) de l'équipement mobile (1) aux services de communication ou permettre à l'utilisateur d'accéder à certains services auxquels il est abonné puis retourne en mode écoute (figure 4, flèche 310a). L'équipement mobile (1) sélectionne une cellule (figure 4, bloc 311). A partir du bloc de choix de cellule (311), si une cellule appropriée est trouvée (figure 4, flèche 311 a) par l'équipement mobile (1), l'équipement mobile (1) mémorise les informations relatives à cette autre cellule appropriée trouvée dans les moyens de mémorisation (13) de l'équipement mobile (1) et se cale sur l'autre cellule trouvée (figure 4, bloc 306). A partir du bloc de choix de cellule (311), si une cellule appropriée n'est pas trouvée (figure 4, flèche 311 b), l'équipement mobile (1) sélectionne une autre cellule (figure 4, bloc 303) et réitère les actions de la procédure (101) de « sélection de cellules » à partir du bloc (303).

Nous allons décrire, à présent, les différents blocs de la procédure (101) de « sélection de cellules » illustrant la figure 4.

Le bloc de sélection de cellule de priorité normale (301) correspond à la sélection d'une cellule initiale en cherchant tout les canaux radiofréquences (RF).

Le bloc (304) de sélection de cellule dans la liste de cellules mémorisée dans la carte d'accès aux services de communication (15) de l'équipement mobile (1) correspond à la sélection de cellule initiale où l'information du canal de signalisation diffusé (en anglais : Broadcast Control Channel (BCCH) porteur pour le réseau sélectionné est mémorisée dans les moyens de mémorisation (13) de l'équipement mobile (1).

Le bloc de calage normal de l'équipement mobile (1) sur une cellule (302) correspond au calage de l'équipement mobile (1) sur une cellule du réseau enregistré et peut être capable d'émettre et de recevoir des appels si l'équipement mobile (1) est passé en mode de fonctionnement « standard » et donc si la procédure d'enregistrement de la localisation (102) a été activée par le moyen de déclenchement (10a ou 10b) de l'équipement mobile (1).

Le bloc de resélection de cellule de priorité normale (305) consiste à ce que l'équipement mobile (1) détermine que la resélection de la cellule est nécessaire et qu'un essai est réalisé pour resélectionner une nouvelle cellule.

Le bloc de choix de cellule (309) consiste à ce que l'équipement mobile (1) retourne dans le mode « écoute » à partir du mode de fonctionnement « standard » et choisit une cellule appropriée pour se caler dessus.

Le bloc de sélection d'une autre cellule (303) consiste à ce que l'équipement mobile (1) soit incapable de se caler normalement sur une autre cellule du réseau sélectionné ou ne puisse pas obtenir un service à cause des réponses de l'essai de l'enregistrement de la localisation (102). L'équipement mobile (1) recherche une cellule d'un autre réseau pour se caler dessus de façon à ce que, par exemple, des appels d'urgence puissent être effectués.

Le bloc de calage de l'équipement mobile (1) sur une autre cellule (306) consiste à ce que l'équipement mobile (1) se cale sur une cellule indépendante de l'identité du réseau (2) de façon à ce que, par exemple, les appels d'urgence puissent être effectués.

Le bloc de resélection d'une autre cellule (307) consiste à ce que l'équipement mobile (1) essaie de resélectionner une cellule, indépendante de l'identité du réseau.

Le bloc de choix d'une cellule (311) consiste à ce que l'équipement mobile (1) retourne dans le mode « écoute », après être passé en mode de fonctionnement « standard » à partir du bloc « calage de l'équipement mobile (1) sur une autre cellule » (306) par exemple, pour mettre à jour certaines informations mémorisées dans une carte d'accès (15) de l'équipement mobile (1) aux services de communication ou permettre à l'utilisateur d'accéder à certains services auxquels il est abonné. L'équipement mobile (1) essaie de trouver une cellule appropriée pour se caler dessus.

De façon avantageuse, la partie logicielle (161) du mode « écoute » des moyens de gestion et de commande (16) de l'équipement mobile (1) est mise en oeuvre pour effectuer les procédures de « sélection du réseau » (100) représentée à la figure 3 et de « sélection de cellules » (101) représentée à la figure 4 ou 5. Les autres parties encadrées et représentées en pointillé sur les figures 3 et 4 ou 5 ne sont exécutées que lors du réveil et de l'établissement de la communication normale par la partie logicielle (162) destinée au mode de fonctionnement « standard » de l'équipement mobile (1) lorsque l'équipement s'attache au réseau (2) en envoyant son IMSI (International Mobile Subscriber Identity).

Dans un mode d'utilisation, l'équipement mobile (1) selon l'invention peut être destiné à être embarqué dans des véhicules automobiles pour générer un appel d'urgence selon sa définition standard (norme européenne ou autre définition). Dès le déclenchement manuel ou automatique, l'équipement mobile (1) alors en mode « écoute » est réveillé et passe en mode de fonctionnement « standard » en s'accrochant au réseau et à la cellule sélectionnés. De ce fait, l'équipement mobile (1) se connecte rapidement au réseau puisqu'il a mémorisé des informations relatives au réseau et à la cellule dans ces moyens de mémorisation (13). Une fois connecté, l'équipement mobile (1) envoie un ensemble de données selon la norme utilisée pour ces appels d'urgence.

En évitant de s'attacher au réseau (2) lorsque ce n'est pas nécessaire, l'équipement mobile (1) évite au réseau (2) de consommer des ressources de ses bases de données VLR, SGSN et HLR pour maintenir à jour les codes de zone de localisation LAC (Location Area Code), de zone de routage RAC (Routing Area Code) ou les identités de cellules (Cell Id) en fonction du déplacement de l'équipement mobile (1) et de consommer en ressources de transmission pour ces informations.

L'équipement mobile (1) peut, par exemple et de manière non limitative, être également embarqué dans des modules ou consoles de jeux pour permettre la mise à jour de l'application utilisée par les jeux. Cette mise à jour est déclenchée sur initiative de l'utilisateur. Elle pourra être également automatique à certains moments du jeu.

Un des avantages de l'invention est que l'équipement mobile (1) réveillé sur initiative d'un utilisateur ou par déclenchement d'un événement externe permet une utilisation immédiate et une réduction des ressources utilisées sur le réseau (2).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Equipement mobile (1) comprenant une interface (12) utilisateur, une carte d'accès aux services de communication (15), des moyens de mémorisation (13) d'informations, des moyens d'émission et de réception (14) pour communiquer à travers un réseau (2), des moyens de gestion et de commande (16) destinés à la gestion des ressources, de l'itinérance et à la commande de l'établissement des connexions, **caractérisé en ce que** l'équipement mobile (1) est apte à fonctionner, après sa mise sous tension et une connexion au réseau (2), selon un premier mode dit « écoute » dans lequel l'équipement mobile (1) a un impact réduit de signalisation sur le réseau (2) et un second mode dit « standard » dans lequel l'équipement mobile (1) fonctionne comme un équipement mobile standard, le passage du mode « écoute » au mode de fonctionnement « standard » étant réalisé par un moyen de déclenchement automatique (10a) ou manuel (10b) prévu sur l'équipement mobile (1), les moyens de mémorisation de l'équipement mobile
(1) étant aptes à stocker des informations relatives au réseau (2) et à la cellule appropriés lorsque l'équipement mobile (1) est en mode « écoute », lesdites informations relatives au réseau (2) et à la cellule étant utilisées par des moyens de gestion et de commande (16) de l'équipement mobile (1) dès le déclenchement, via le moyen de déclenchement (10a, 10b), du mode de fonctionnement « standard » de l'équipement mobile (1) pour permettre une connexion rapide au réseau (2) et une utilisation rapide de l'équipement mobile (1).

2. Equipement mobile (1) selon la revendication 1, **caractérisé en ce que** les moyens de réception et d'émission (14) de l'équipement mobile (1) sont aptes à communiquer à travers des réseaux de type « GSM » ou de type « UMTS » ou selon les nouvelles normes de téléphonie mobile (E-UTRAN défini par l'ETSI/3GPP).

3. Equipement mobile (1) selon la revendication 2, **caractérisé en ce que** le moyen de déclenchement manuel (10b) correspond à une initiative d'un utilisateur par action sur un dispositif de déclenchement ou par détection d'un message défini et le moyen de déclenchement automatique (10a) correspond à un événement externe détecté par ou transmis à l'équipement mobile (1).

4. Equipement mobile (1) selon la revendication 2 ou 3, **caractérisé en ce qu'**un timer ou compteur (11) est prévu au sein de l'équipement mobile (1) pour autoriser une connexion au réseau (2) à des moments prédéfinis.

5. Equipement mobile (1) selon une des revendications 2 à 4, **caractérisé en ce que** les moyens de gestion et de commande (16) comportent une partie logicielle (161) destinée au mode « écoute » et apte à sélectionner un réseau (2) approprié selon une procédure « de sélection de réseau » (100) puis une cellule appropriée selon une procédure « de sélection de cellules » (101) et une partie logicielle (162) destinée au mode de fonctionnement « standard » et apte à déclencher le signalement de la position par mise à jour de la localisation de l'équipement mobile (1) au réseau (2) selon une procédure de mise à jour de localisation ou d'attachement au réseau (2) connue sous le nom « IMSI Attach » et respectivement pour un domaine paquet par les procédures « GPRS Attach » et mise à jour de routage « Routing Area Update ».

6. Procédé de fonctionnement de l'équipement mobile (1), selon une des revendications 2 à 5, **caractérisé en ce qu'**il comprend :
- une procédure « de sélection du réseau » (100) effectuée par un utilisateur, de choix du mode de sélection automatique ou manuelle du réseau (100), et dans le cas d'un mode de sélection manuelle du réseau, une étape préalable (100b) de sélection manuelle du réseau (2) par l'utilisateur ;
- une fois le réseau (2) sélectionné, une procédure « de sélection de cellules » (101);
les procédures de « sélection de réseau » (100) et « de sélection de cellules » (101) étant déclenchées par l'équipement mobile (1) en mode « écoute » après sa mise sous tension et les informations relatives au réseau trouvé et à la cellule appropriée étant mémorisées dans les moyens de mémorisation (13) de l'équipement mobile (1) ; et
- une procédure de mise à jour de la localisation (102) de l'équipement mobile (1) ou d'attachement au réseau (2) connue sous le nom « IMSI Attach » et respectivement pour le domaine paquet des procédures « GPRS Attach » et mise à jour de routage déclenchées par une procédure de « gestion des connexions » de façon à ce que l'équipement mobile (2) s'accroche au réseau (2) pour réaliser les opérations auxquelles il est destiné ;
la procédure de « gestion des connexions » étant déclenchée par l'équipement mobile (1) seulement après l'activation des moyens de déclenchement automatique (10a) ou manuel (10b) du fonctionnement en mode « standard » de l'équipement mobile (1).

7. Procédé selon la revendication 6, **caractérisé en ce que** la procédure « de sélection du réseau » (100) lors du fonctionnement de l'équipement mobile (1) en mode « écoute » consiste à trouver le réseau disponible qui a la plus haute priorité et à mémoriser les informations relatives au réseau trouvé dans les moyens de mémorisation (13) de l'équipement mobile (1).

8. Procédé selon la revendication 6 ou 7, **caractérisé en ce que** la procédure « de sélection de cellules » (101) lors du fonctionnement de l'équipement mobile (1) en mode « écoute » consiste à trouver la cellule appropriée et à mémoriser les informations relatives à ladite cellule appropriée dans les moyens de mémorisation (13) de l'équipement mobile (1) pour connecter rapidement l'équipement mobile (1) au réseau trouvé (2) lorsque l'équipement mobile (1) passe en mode de fonctionnement « standard ».

9. Utilisation de l'équipement mobile (1) selon une des revendications 1 à 5, **caractérisée en ce que** l'équipement mobile (1) est destiné à être embarqué dans tout dispositif mobile destiné à ne pas être appelé mais à se connecter au réseau sur un événement déclencheur interne ou externe.

10. Utilisation selon la revendication 9, **caractérisée en ce que** l'équipement mobile (1) est embarqué dans un véhicule automobile pour générer un appel d'urgence à un centre d'appel d'urgence selon sa définition standard.

11. Utilisation selon la revendication 9, **caractérisée en ce que** l'équipement mobile (1) est embarqué dans un module ou console de jeux pour permettre les mises à jour de l'application utilisée par les jeux à des moments prédéfinis.

12. Utilisation selon la revendication 9, **caractérisée en ce que** l'équipement mobile (1) est embarqué dans un système d'alarme pour générer un signal d'alarme à un centre de surveillance si nécessaire.

13. Utilisation selon une des revendications 9 à 12, **caractérisée en ce que** dès le déclenchement manuel ou automatique, l'équipement mobile (1) alors en mode « écoute » est réveillé et passe en mode de fonctionnement « standard » pour se connecter rapidement au réseau (2) approprié et envoyer un ensemble de données ou établir une connexion selon le schéma prévu pour cette application.
